Europäisches Patentamt

European Patent Office

Office européen des brevets

(19)

(11) Veröffentlichungsnummer: **0 297 377 B1**

(12) # EUROPÄISCHE PATENTSCHRIFT

(45) Veröffentlichungstag der Patentschrift: **29.07.92**

(51) Int. Cl.⁵: **H01M 4/88**, H01M 4/90, C25B 11/04

(21) Anmeldenummer: **88109767.9**

(22) Anmeldetag: **20.06.88**

Die Akte enthält technische Angaben, die nach dem Eingang der Anmeldung eingereicht wurden und die nicht in dieser Patentschrift enthalten sind.

(54) **Verfahren zur Herstellung einer kunststoffgebundenen Gasdiffusionselektrode, die einen Manganoxidkatalysator der überwiegenden Zusammensetzung eines Gemisches aus Dimangantrioxid und Pentomanganoktoxid enthält.**

(30) Priorität: **03.07.87 DE 3722019**

(43) Veröffentlichungstag der Anmeldung:
**04.01.89 Patentblatt 89/01**

(45) Bekanntmachung des Hinweises auf die Patenterteilung:
**29.07.92 Patentblatt 92/31**

(84) Benannte Vertragsstaaten:
**AT BE DE FR GB IT NL**

(56) Entgegenhaltungen:
**EP-A- 0 140 973**
**FR-A- 2 021 396**
**US-A- 4 269 691**

**PATENT ABSTRACTS OF JAPAN, Band 8, Nr. 272 (E-284)[1709], 13. Dezember 1984; & JP-A-59 143 276 (MATSUSHITA DENKI SANGYO K.K.) 16-08-1984**

**ELECTROCHIMICA ACTA, Band 31, Nr. 1, 1986, Seiten 13-18, Pergamon Press Ltd; K. MATSUKI et al.: "Oxygen reduction electro-**

**catalysis on some manganese oxides"**

**PATENT ABSTRACTS OF JAPAN, Band 8, Nr. 99 (E-243)[1536], 10. Mai 1984; & JP-A-59 16 276 (MATSUSHITA DENKI SANGYO K.K.) 27-01-1984**

(73) Patentinhaber: **VARTA Batterie Aktiengesellschaft**
**Am Leineufer 51**
**W-3000 Hannover 21(DE)**

(72) Erfinder: **Sauer, Hans**
**Pflasterwiese 7**
**W-6270 Idstein 9(DE)**
Erfinder: **Winsel, August, Prof. Dr. Dipl.-Phys.**
**Fasanenstrasse 8**
**W-6233 Kelkheim(DE)**

(74) Vertreter: **Kaiser, Dieter Ralf, Dipl.-Ing.**
**Gundelhardtstrasse 72**
**W-6233 Kelkheim/Ts.(DE)**

EP 0 297 377 B1

**Beschreibung**

Die Erfindung betrifft ein Verfahren zur Herstellung einer kunststoffgebundenen Gasdiffusionselektrode, insbesondere für Brennstoffzellen, Chloralkali-Elektrolysezellen und Luftsauerstoffelemente, die einen Manganoxidkatalysator der überwiegenden Zusammensetzung $Mn_2O_3 \cdot x \, Mn_5O_8$ enthält.

Gaselektroden sind vielfach bewährte Mittel für die Durchführung elektrochemischer Reaktionen, die im Kontakt mit einer elektrisch leitenden Oberfläche und in Gegenwart eines Elektrolyten unter Aufzehrung oder Entwicklung eines Gases ablaufen. Ihre geeignete Form ist daher die eines hochporösen Körpers, beispielsweise aus Nickel, dessen Porenwände mit einem feinverteilten Katalysator aus einem Edelmetall besetzt sind. Eine solche Katalysatorelektrode kann, indem sie einem Gas freien Zutritt zum Elektrolyten und ungehinderte Entfernung von demselben gestattet, nicht nur für Elektrolyseprozesse mit Erfolg verwendet werden, sondern arbeitet ebenso erfolgreich als Elektrode in Brennstoffzellen des Knallgastyps oder als Sauerstoff-Depolarisatorelektrode in galvanischen Metall-Luft-Elementen. Ein besonders interessantes technisches Einsatzgebiet für diese Sauerstoffelektroden ist auch die Chloralkalielektrolyse.

Mit Rücksicht auf den hohen Preis der Edelmetallkatalysatoren z.B. aus Platin, Palladium, Silber oder Gold hat man diese in der Vergangenheit bereits durch verschiedene Manganoxide, die ebenfalls sehr gute elektrokatalytische Eigenschaften besitzen, zu ersetzen versucht. Von diesen ist nicht nur das Dioxid, $MnO_2$, in seinen verschiedenen Kristallarten $\alpha$-, $\beta$- und $\gamma$-$MnO_2$ wirksam, von denen die $\gamma$-Form am stärksten fehlgeordnet und daher besonders aktiv ist, sondern noch mehr Bedeutung wird einigen niederen Oxiden, etwa dem $Mn_3O_4$ (Hausmannit) oder dem $Mn_2O_3$, weil sie stabiler sind, zugemessen.

Die US-PS 4,269,691 offenbart ein Herstellungsverfahren für Elektroden mit Manganoxidkatalysatoren, bei dem poröse Nickel-Sinterplatten mit Lösungen von Mangansalzen wie Mangannitrat, Mangancarbonat oder dem Mangansalz einer Fettsäure getränkt, dann getrocknet und bis auf ca. 700°C erhitzt werden, bei welcher Temperatur die in den Poren vorhandenen Salzrückstände vollständige pyrolytische Zersetzung zu niederen Manganoxiden erleiden.

Eine weit weniger aufwendige poröse Luftelektrode, weil sie auf den Gerüstkörper aus gesintertem Nickelpulver verzichtet, wird gemäß US-PS 4,595,643 aus $\gamma$-MnOOH hergestellt, indem man dieses auf Temperaturen zwischen 300 und 400°C erhitzt, die dabei entstandenen Manganoxide unter Zusatz von Aktivkohle und Ruß mit einer PTFE-Dispersion anteigt, knetet und das Knetprodukt in ein Metallnetz einpreßt. Die in dieser bekannten kunststoffgebundenen Elektrode enthaltenen Manganoxidkatalysatoren, die eine besonders gute Aktivität besitzen, stellen im wesentlichen ein Gemisch aus $Mn_5O_8$ und $Mn_2O_3$, letzteres in der stabilen kubisch kristallisierenden $\alpha$-Modifikation, dar, wobei die Bruttozusammensetzung des Katalysators etwa einem Manganoxid der Formel $MnO_x$ mit $1{,}45 < x < 1{,}60$ entspricht.

Der Erfindung liegt die Aufgabe zugrunde, eine ähnliche Sauerstoffelektrode und ggfls. mit dem nämlichen Manganoxidkatalysator auf rationellere und in der Fertigung besser reproduzierbare Weise verfügbar zu machen.

Die Aufgabe wird erfindungsgemäß mit den im kennzeichnenden Teil des Anspruchs 1 angegebenen Mitteln gelöst.

Dabei hat sich zunächst das als Handelsprodukt leicht zugängliche Mangancarbonat, beispielsweise in der Merck-Qualität "Mangan(II)-carbonathydrat, reinst," als ein sehr geeignetes Ausgangsmaterial erwiesen. Wird nämlich Mangancarbonat bei Luftzutritt auf Temperaturen zwischen 450 und 550°C, vorzugsweise 510 und 530°C mit einer Verweildauer von 1/2 bis 2 h in dem nämlichen Temperaturbereich erhitzt, so entsteht ausweislich seines Röntgendiffraktogramms im wesentlichen das aus der US-PS 4,595,643 bereits bekannte Katalysatormaterial, welches als ein Gemisch aus $Mn_2O_3$ und $Mn_5O_8$ mit etwas schwankenden Anteilen der beiden Komponenten, daher als $Mn_2O_3 \cdot x \, Mn_5O_8$, identifiziert werden kann und ggfls. geringe Mengen $MnO_2$ enthält, die sich erst oberhalb 500°C restlos zersetzen.

Indem man das Produkt dieses thermischen Abbaus des Mangankarbonats zusammen mit Kohlepulver (Ruß und/oder Graphit) als Leitmaterial bzw. Träger und Polytetrafluoräthylen (PTFE) als Binder dann einem intensiven Mischprozeß in einer Messermühle, wie sie z.B. in der DE-PS 29 41774 beschrieben wird, unterwirft, die Trockenmischung dann zu einer Folie auswalzt und diese in ein Metallnetz aus Silber, Nickel oder versilbertem Nickel einwalzt, erhält man eine erfindungsgemäß hergestellte Elektrode. Als Reaktionsgefäß, in dem die Zersetzungsreaktion des Mangankarbonats besonders günstig, weil im kontinuierlichen Durchlauf und unter genauer Temperaturkontrolle, durchgeführt werden kann, hat sich ein in der DE-PS 24 03 998 beschriebener, gasdicht ummantelter und beheizbarer Vibrationswendelförderer erwiesen. Bei diesem Reaktor wird das mit einer Förderschnecke eindosierte Mangankarbonat auf einer elektrisch beheizten, vibrierenden Wendel in dünner Schicht von oben nach unten befördert, während Luft oder $O_2$ der Pulverschicht entgegenströmt, sich dabei mit dem entstehenden Manganoxid ins Gleichgewicht setzt und das von der Kalzination des Karbonats herrührende $CO_2$ zusammen mit unbeteiligtem $N_2$ aus dem

oberen Teil des Reaktors austrägt.

Die häufigste Korngröße (Korndurchmesser) des Ausgangsmaterials, $MnCO_3 \cdot H_2O$, liegt bei 24 $\mu$m. Bei der Reaktion entsteht eine Kornverteilung, in der ein breites Maximum zwischen 10 und 50 $\mu$m Korndurchmesser auftritt, bei dem jedoch die kleinen Korndurchmesser zu Lasten der größeren vermehrt werden. Bei 530°C z.B. ist die Kornverteilung nicht sehr stark von der Verweilzeit abhängig, der 50%-Punkt liegt bei ca. 15 $\mu$m Durchmesser. Die Analyse des Katalysatormaterials zeigt, daß schon bei 460°C das Karbonat restlos zersetzt ist und daß im wesentlichen ein Gemisch aus $Mn_2O_3$ und $Mn_5O_8$, vorwiegend dem erstgenannten, vorliegt. Man erhält diese Information sowohl aus dem Debye-Scherrer-Diagramm als auch aus der Differentialthermoanalyse (DTA).

Dieses Material, das aus dem Wendelförderer-Reaktor kontinuierlich ausgetragen wird, kann man auch im Wirbelschicht-Reaktor oder aber in Drehrohröfen erzeugen. Es besitzt einen sehr hohen Ohmschen Widerstand von 100 k$\Omega$cm, wenn es als Pulverpreßling gemessen wird. Setzt man dem Mangankarbonatpulver feingemahlenes KOH-Hydratpulver oder Kaliumpermanganatpulver zu, so entsteht bei der geschilderten thermischen Behandlung ein Katalysatormaterial mit stark verbesserter Leitfähigkeit, z.B. 10$\Omega$cm. Dies ermöglicht die Herstellung von Elektroden aus einem hochprozentigen Katalysatormaterial.

Erfindungsgemäß wird jedoch die mangelnde Eigenleitfähigkeit des Katalysators durch einen Zusatz von Kohlenstoffpulver, bestehend aus Ruß, Graphit, Aktivkohle oder Mischungen aus denselben, kompensiert.

In einer besonders vorteilhaften Variante des erfindungsgemäßen Verfahrens erfolgt nunmehr die Aufbereitung des Manganoxidkatalysators zu einer verarbeitungsfähigen aktiven Elektrodenmasse in zwei Stufen, derart, daß zuerst je ein kleinerer Teil der insgesamt vorgesehenen Leitmittelmenge sowie des PTFE in dem schnellaufenden Mischwerk mit dem Katalysatorpulver vermischt werden und daß diese Erstmischung dann mit den zurückgestellten größeren Restmengen erneut vermischt wird, nachdem sie zuvor noch verdichtet und zu einem Granulat vermahlen worden ist. Besonders zweckmäßig werden die besagten Restmengen an Kohlepulver und PTFE in einem gesonderten Mischungsgang vorgemischt und in der zweiten Mischstufe nur während eines relativ kurzen Mischvorganges von ca. 1 Min. Dauer in der Messermühle mit der katalysatorhaltigen Erstmischung vereinigt. Auf diese Weise bleibt deren Granulatstruktur, die aus weiter unten erläuterten Gründen besonders günstig ist, weitgehend erhalten.

Die fertige Elektrodenmischung sollte erfindungsgemäß so zusammengesetzt sein, daß sie zwischen 15 und 65 Gew.% Manganoxidkatalysator, 15 bis 35 Gew.% PTFE und als Rest (bis 100 Gew.%) kohlenstoffhaltiges Leitmittel enthält.

Anstelle des PTFE-Pulvers kann auch ein hydrophiles Bindermaterial wie z.B. Polyvinylalkohol verwendet werden.

Durch Auswalzen dieser Elektrodenmischung zu einer Folie von ca. 0,25 mm Dicke und Einwalzen derselben in ein Nickelnetz, versilbertes Nickelnetz oder auch in ein Edelstahlnetz von beispielsweise 0,5 mm Maschenweite und 0,14 mm Drahtstärke entsteht die fertige Elektrode. Diese kann auch mit Überdruck als $O_2$- oder Luftelektrode in Brennstoffzellen oder Zink/Luft-Zellen betrieben werden. Will man drucklos arbeiten, so empfiehlt sich die gasseitige Aufbringung einer porösen PTFE-Folie in an sich bekannter Weise durch Zusammenwalzen in mit Benzin oder Isopropylalkohol oder einem Chlorfluorkohlenstoff (z.B. "Frigen" der Fa.Hoechst AG) durchtränkten Zustand. Elektroden, die auf diese Weise hergestellt sind, zeigen hervorragende kathodische Belastungspotentiale.

Charakteristisch für die erfindungsgemäß erhaltene Elektrodenstruktur ist, daß die ursprünglichen Katalysatorkörner mit dem Leitmaterial in den Granulatkörnern zusammenhängende hydrophile Poren ausbilden, die sich von Granulatkorn zu Granulatkorn über die gesamte Elektrode erstrecken. Zwischen den von PTFE-Fäden umsponnenen Granulatkörnern bilden sich hydrophobe Gasporen besonders in den Zwickeln aus, die zusammenhängend die Elektrode in ihrer ganzen Tiefe mit Gas versorgen. Die beiden sich durchdringenden, zusammenhängenden Porensysteme, von denen das eine hydrophil ist und den Elektrolyten enthält, während das andere hydrophob ist und die Gasphase aufnimmt, vermitteln in ihrem Grenzbereich die Transportprozesse und die elektrochemische Reaktion zwischen Gasmolekülen, Elektronen und Ionen.

Diese biporöse Struktur ist die Voraussetzung für den vorteilhaften Einsatz der Sauerstoffelektrode auch in Chloralkali-Elektrolysezellen mit Spülung der elektrolytführenden Poren nach dem aus der DE-PS-1 164 525 bekannten Eloflux-Prinzip.

Abschließend werden zwei Rezepturen für die Herstellung von jeweils 100 g walzfertiger Elektrodenmischung angegeben.

Beispiel 1

| Mischung 1: | Mischung 2: |
|---|---|
| 30 g Manganoxidkatalysator<br>7 g Ruß<br>2 g PTFE | 35 g Aktivkohle<br>3 g Graphit<br>23 g PTFE |

Die Bestandteile der Mischung 1 werden in einem schnellaufenden Mischwerk 5 Min. lang intensiv gemischt, anschließend in einem Walzenstuhl bei einem Walzenabstand von 0,25 mm verdichtet und dann granuliert.

Die Bestandteile der Mischung 2 werden ebenfalls 5 Min. lang intensiv gemischt, darauf mit der granulierten Mischung 1 vereinigt und die vereinigte Menge ca. 1 Min. lang in dem gleichen schnellaufenden Mischwerk fertig gemischt.

Beispiel 2

| Mischung 1: | Mischung 2: |
|---|---|
| 30 g Manganoxidkatalysator<br>15 g Aktivkohle<br>5 g PTFE | 20 g Aktivkohle<br>10 g Ruß<br>20 g PTFE |

Herstellung und Vereinigung der Mischungen 1 und 2 erfolgt in der gleichen Weise wie im Beispiel 1 beschrieben.

Es kann von Vorteil sein, die Mischungen 2 mit jeweils nur etwa der Hälfte der hier vorgesehenen PTFE-Mengen, d.h. in Beispiel 1 mit 11,5 g PTFE, in Beispiel 2 mit 10 g PTFE, herzustellen und die vorenthaltenen Mengen zusammen mit der granulierten Mischung 1 während der kurzen Fertigmischung zu verarbeiten.

**Patentansprüche**

1. Verfahren zur Herstellung einer kunststoffgebundenen Gasdiffusionselektrode, insbesondere für Brennstoffzellen, Chloralkali-Elektrolysezellen und Luftsauerstoffelemente, die einen Manganoxidkatalysator der überwiegenden Zusammensetzung $Mn_2O_3 \cdot X \ Mn_5O_8$ enthält, dadurch gekennzeichnet, daß Mangankarbonat, $MnCO_3$, im Luftstrom bei Temperaturen zwischen 450 und 550°C thermisch zersetzt wird, daß das als Zersetzungsprodukt erhaltene Manganoxidkatalysator-Pulver mit Polytetrafluoräthylenpulver (PTFE) unter Zusatz von Ruß und/oder Graphit und/oder Aktivkohle intensiv gemischt wird und die Mischung zu einer Folie ausgewalzt und diese in ein Metallnetz eingewalzt wird.

2. Verfahren nach Anspruch 1, dadurch gekennzeichnet, daß die Zersetzungstemperatur 510 bis 530°C mit einer Verweilzeit zwischen 30 Min. und 2 h beträgt.

3. Verfahren nach den Ansprüchen 1 und 2, dadurch gekennzeichnet, daß die thermische Zersetzung des Mangankarbonats in einem Vibrations-Wendelförderer durchgeführt wird.

4. Verfahren nach Anspruch 3, dadurch gekennzeichnet, daß dem Mangankarbonatpulver feingemahlenes Kaliumhydroxidpulver oder Kaliumpermanganatpulver zugesetzt wird.

5. Verfahren nach den Ansprüchen 1 bis 4, dadurch gekennzeichnet, daß die intensive Vermischung des Manganoxidkatalysator-Pulvers mit dem Leitmittel und PTFE in zwei Stufen erfolgt, wobei in der ersten Mischstufe jeweils nur kleinere Teilmengen der insgesamt vorgesehenen Mengen an Leitmittel und PTFE dem Katalysator zugesetzt werden und in der zweiten Mischstufe die größeren Restmengen eingesetzt werden, und daß die Erstmischung vor Ergänzung mit den Restmengen verdichtet und granuliert wird.

6. Verfahren nach Anspruch 5, dadurch gekennzeichnet, daß die größeren Restmengen an Leitmittel und PTFE gesondert intensiv gemischt und durch einen nur kurzen Mischvorgang in die granulierte

4

Erstmischung eingebracht werden.

**7.** Verfahren nach Anspruch 6, dadurch gekennzeichnet, daß die fertige Elektrodenmischung aus 15 bis 65 Gew.% Manganoxidkatalysator, 15-35% PTFE und zum Rest aus kohlenstoffhaltigem Leitmittel besteht.

## Claims

**1.** Process for producing a plastics-bound gas diffusion electrode, in particular for fuel cells, chlor-alkali electrolysis cells and air cells, which contain a manganese oxide catalyst predominantly composed of $Mn_2O_3$ x $Mn_5O_8$, characterized in that manganese carbonate, $MnCO_3$, is decomposed by heat in an air flow at temperatures between 450 and 550°C, in that the manganese oxide catalyst powder obtained as the decomposition product is intimately mixed with polytetrafluoroethylene powder (PTFE) with the addition of soot and/or graphite and/or activated charcoal and the mixture is rolled out into a sheet and the latter is rolled into a metal mesh.

**2.** Process according to Claim 1, characterized in that the decomposition temperature is 510 to 530°C with a residence time between 30 min and 2 h.

**3.** Process according to Claims 1 and 2, characterized in that the decomposition by heat of the manganese carbonate is carried out in a vibrational helical conveyor.

**4.** Process according to Claim 3, characterized in that finely ground potassium hydroxide powder or potassium permanganate powder is added to the manganese carbonate powder.

**5.** Process according to Claims 1 to 4, characterized in that the intimate mixing of manganese oxide catalyst powder with the conductive agent and PTFE takes place in two stages, in the first mixing stage in each case only relatively small partial quantities of the quantities of conductive agent and PTFE provided overall being added to the catalyst, and in the second mixing stage the relatively large remaining quantities being put in and in that the first mixture is compressed and granulated before the remaining quantities are added.

**6.** Process according to Claim 5, characterized in that the relatively large remaining quantities of conductive agent and PTFE are mixed intimately separately and are incorporated into the granulated first mixture by an only brief mixing procedure.

**7.** Process according to Claim 6, characterized in that the finished electrode mixture comprises 15 to 65% by weight of manganese oxide catalyst, 15-35% of PTFE and the rest of carbon-containing conductive agent.

## Revendications

**1.** Procédé pour la fabrication d'une électrode à diffusion gazeuse liée par une matière synthétique, notamment pour des piles à combustible, des cellules d'électrolyse chlore-alcali et des éléments à oxygène de l'air, qui contient un catalyseur à oxyde de manganèse dont la composition prépondérante est $Mn_2O_3$ · x $Mn_5O_8$, procédé caractérisé en ce que du carbonate de manganèse, $MnCO_3$, est décomposé thermiquement dans un courant d'air à des températures comprises entre 450 et 550°C, en ce que la poudre de catalyseur à l'oxyde de manganèse obtenue comme produit de décomposition, est mélangée de façon intensive avec une poudre de polytétrafluoréthylène (PTFE) avec addition de suie et/ou de graphite, et/ou de charbon actif, puis le mélange est laminé pour obtenir un film et celui-ci est appliqué par laminage sur un réseau métallique.

**2.** Procédé selon la revendication 1, caractérisé en ce que la température de décomposition est de 510 à 530°C avec un temps de séjour compris entre 30 minutes et 2 heures.

**3.** Procédé selon les revendications 1 et 2, caractérisé en ce que la décomposition thermique du carbonate de manganèse est effectuée dans un transporteur hélicoïdal à vibration.

**4.** Procédé selon la revendication 3, caractérisé en ce que de la poudre d'hydroxyde de potassium ou bien de la poudre de permanganate de potassium finement moulue est ajoutée à la poudre de carbonate de manganèse.

5. Procédé selon les revendications 1 à 4, caractérisé en ce que le mélange intensif de la poudre de catalyseur à oxyde de manganèse avec l'ajout conducteur et le PTFE s'effectue en deux étapes, auquel cas, dans la première étape de mélange, seules de petites quantités partielles des quantités prévues au total en ajout conducteur et en PTFE sont ajoutées au catalyseur, tandis que dans la seconde étape de mélange, sont ajoutées des quantités résiduelles plus importantes, et en ce que le premier mélange est comprimé et granulé avant d'être complété avec les quantités résiduelles.

6. Procédé selon la revendication 5, caractérisé en ce que les quantités résiduelles plus importantes en ajout conducteur et en PTFE sont mélangées séparément de façon intensive et sont seulement introduites par un court processus de mélange dans le premier mélange granulé.

7. Procédé selon la revendication 6, caractérisé en ce que le mélange d'électrode terminé est constitué de 15 à 65 % en poids de catalyseur à l'oxyde de manganèse, de 15 à 35 % en poids de PTFE et pour le reste d'un ajout conducteur contenant du carbone.